# EUROPEAN PATENT SPECIFICATION

(11) **EP 1 963 724 B1**
(45) Date of publication and mention of the grant of the patent: **25.03.2009**
(21) Application number: 06831475.6
(22) Date of filing: 22.12.2006
(51) Int. Cl.: F16K 31/60, E03C 1/04

(54) **WATER TAP OR FAUCET**
WASSERHAHN
ROBINET A EAU

(30) Priority: 23.12.2005 GB 0526333
(43) Date of publication of application: 03.09.2008
(73) Proprietor: HORNE ENGINEERING LIMITED, Johnstone Renfrewshire PA5 8BD (GB)
(72) Inventor: JARVIS, Michael, Wellesley, Grahame, Glasgow G12 9LP (GB)
(74) Representative: Gray, John James
(86) International application number: PCT/GB2006/004921
(87) International publication number: WO 2007/072058

(56) References cited:
- DE-A1- 10 239 177
- JP-A- 9 004 752
- US-A1- 2005 072 791

## Description

The invention relates to taps (US: faucets) for the delivery of water to a user at a sink or basin. The invention is of particular application in settings where hygiene is a priority, as for example in hospitals, but is not limited to any particular setting.

Taps of this type are known from the document DE 10239177.

In a hospital, when surgical staff scrub up before an operation they are required to wash or scrub their hands and forearms prior to starting the operation and handling the patient. It has been customary for them to use a lever action tap which can be turned on and turned off by using an elbow or forearm. The problem with this arrangement is that they touch the lever at the same place when turning the tap on, prior to scrubbing up, and off again after scrubbing up. Turning the tap on and off requires some dexterity with an elbow and is not easy. Aside from the high level of cleanliness expected around the operating theatre, it is increasingly realised that cleanliness is important for infection control throughout hospitals and other institutions, because of the spread of MRSA and other antibiotic-resistant bugs.

The present invention has as its object to provide taps permitting an improved combination of ergonomics and infection control.

The invention in a first aspect provides a lever action tap comprising a body on which is mounted at least one rotary control for manually regulating the flow of water through the tap to a spout, the control having open and closed states separated by rotation less than 180° about a rotation axis, the control comprising a long lever arm and at least one short lever arm having a fixed lever arm, either lever arm being operable to operate the same rotary control.

With this dual-lever arrangement the hand, which is easier than the elbow, can be used to open the tap by moving a short lever, and since this is done prior to scrubbing the surface of this lever may be contaminated by the hand. After scrubbing the tap can be turned off by moving the long lever by elbow and since this lever has not been touched prior to scrubbing it is free from contamination and, therefore, cannot contaminate the elbow of the user.

The angle of rotation between the open and closed states is preferably on the order of 90°, but could be in the range 50-100°. Quarter-turn mechanisms (90°) are well-developed, and common in the art. Other configurations having 100° and 120° are also known, however.

The arrangement of the lever arms and orientation of the rotation axis in relation to the intended mounting orientation of the tap may be such that, when the tap is mounted for use, the long lever arm will be approximately vertical in the closed state of the control, and projecting generally towards the user in the open state.

The rotation axis of the control may be substantially horizontal, and transverse to the typical stance of the user. These are not strict requirements, of course. The orientation of the rotation axis may in practice be set (out of ergonomic and manufacturing considerations) within a range of angles up to 15° or even 30° above and below, forward and rearward of truly horizontal and transverse to the user's line of approach.

The long lever arm may be arranged to rotate upwards and away from the user in moving from the open state to the closed state.

The long lever arm may be arranged to rotate slightly beyond vertical and away from the user, for example to an angle of 5 to 15° or 30° beyond vertical, before completing said rotation to the closed state.

The arrangement of the lever arms and mounting means of the tap may be such that the short lever arm projects generally toward the user in the closed state, moving to a more vertical orientation in the open state.

The short lever arm may be arranged to rotate downwards and away from the user, in moving from the closed state to the open state.

The short lever may be arranged to lie at an angle slightly below horizontal in the closed state, for example in the range 5 to 15° or 30° below horizontal.

The angular separation between the lever arms may be in the range 80° to 160°, preferably 90° to 150°, and more preferably between 100° and 140°.

The long lever arm may extend 12cm or more from the rotation axis. 15cm is typical for elbow operation, but the long lever in the present tap may extend more than 16cm if desired. The short lever arm may extend less than 10cm from the rotation axis of the control. The long lever arm may extend to more than twice the length of the short lever arm, measured from their common rotation axis.

One or both lever arms may be provided with an ergonomically shaped extremity for comfortable operation.

The invention in a second aspect provides a lever action tap comprising a body on which is mounted at least one rotary control for manually regulating the flow of water through the tap to a spout, the control having open and closed states separated by rotation less than 180° about a rotation axis, the control comprising first and second lever arms having a fixed angular separation, either lever arm being operable to operate the same rotary control, wherein the rotation axis is oriented substantially horizontal and transversely with respect to the typical stance of a user so that said lever arms rotate towards and away from the user in moving the control between said open and closed states.

The first lever arm may be arranged to rotate upwards and away from the user in moving from the open state to the closed state.

The second lever arm may be arranged to rotate downwards and away from the user, in moving from the closed state to the open state.

The various optional and preferred features of the first aspect of the invention can be applied equally in implementation of the second aspect. For example, the first lever arm may be significantly longer than the second lever arm.

In either aspect, the invention includes embodiments wherein the tap is a mixer tap having inlets for cold and hot water supplies and having a second control of the same form as the first-mentioned control. Said first and second controls may be arranged at opposite sides of the tap body, either side of the spout portion. The rotation axes of the two controls may be aligned with one another, or may have an angular deviation between them.

The mixer tap body may incorporate a thermostatic element for controlling mixing of water from hot and cold water supplies, to provide a safe hot output temperature, the first control regulating flow of the safe temperature hot water and the second control regulating flow of unmixed cold water to the spout portion.

Safe hot supplies are commonly required in hospitals and other care institutions, because of the risk of scalding by water at temperatures much above 40°C.

### BRIEF DESCRIPTION OF THE DRAWINGS

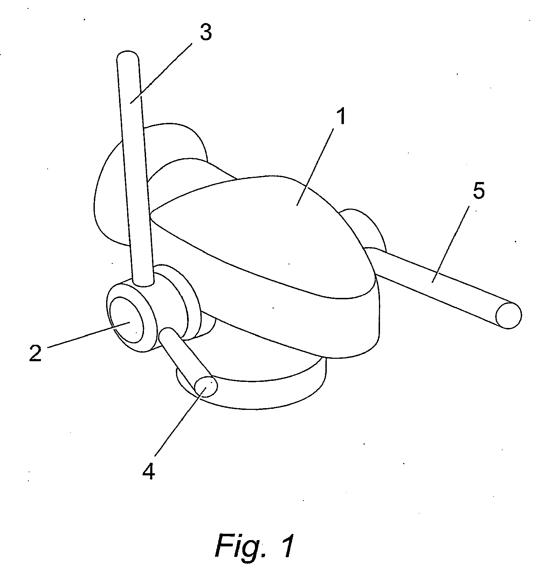

Embodiments of the invention will now be described, by way of example only, by reference to the accompanying drawing, in which the sole Figure is a perspective view of a tap (US: faucet) embodying the present invention.

### DETAILED DESCRIPTION OF THE EMBODIMENTS

In the Figure, tap body 1 is mountable to a wall or similar support so as to present a spout portion toward the user (referred to as the front of the body). Pipe connections for hot and cold water enter in this example through the wall-mounting portion at the rear. The body has a manually operable control on either side. A first control, typically the one on the user's left hand side, is provided for obtaining hot water and a second control is provided for obtaining cold water.

Each control comprises a hub 2, with long and short lever arms 3 and 4 respectively projecting from the hub for purpose of operating the tap by rotating the hub about a transverse axis (that is, an axis running left-right from the point of view of the user). The short lever arm 4 is intended for use in opening the tap, and projects generally forward (presenting itself toward the user) when the tap is closed. The arm 4 rotates downwards to open the tap. The long lever arm 3 projects from hub 2 at a different angle, and is intended for closing the tap. With the tap 'off', the long lever 3 is substantially vertical, but rotates forward to present itself to the user when the tap is opened. The long lever 5 of the right hand control is shown in the forward or open position allowing easy access for closing the tap with hand, for example the back of the hand, or the elbow or forearm. In the vertical (closed) position, the long arm 3 is preferably at an angle slightly beyond vertical, away from the user. This avoids the weight and moment of the long lever tending to open the control unintentionally.

Opening the tap before a hand-washing operation, the hand will be dirty or contaminated and it is the intent of this invention that the cross-contaminating dirt will be confined to the short lever. The lever is long so that closing can be done with the forearm or elbow, thus further reducing the risk of re-contamination of the now-clean hand or forearm. The angle between the long and short lever arms on each hub is fixed to an amount optimal for ergonomic operation in the intended application. In the example shown the angle is approximately 120°. It will normally be in the range 80-160°, preferably greater than 90°.

Additional advantages of the specific arrangement shown include (i) the fact that the "contaminated" lever arm lies below the "clean" lever arm, and hence contaminants cannot run off from the one to the other and (ii) the forearm does not need to be inverted as with conventional long lever taps, reducing the tendency for water to run from the hand along the forearm.

In the embodiment shown, the controls both rotate about axes which are aligned with one another, horizontal and in a vertical plane normal to the line of approach of the user. The lever arms are orthogonal to the axes. However, the rotation axes of the two controls do not need to be strictly horizontal, nor exactly aligned with one another, nor in a common transverse vertical plane. The lever arms need not project strictly orthogonal to the axis of rotation. Rather the orientation of the axes and the angles of the lever arms. Although the lever arms as shown are simple rod-like projections, the arms may be shaped toward the ends to make operation more comfortable or sure. A broad, blade-like portion would be one option.

In a particular embodiment, the body houses a thermostatic mixing module, so that the 'hot' water control in fact delivers mixed hot water at a safe temperature. Further detail of these internal functions can be seen in our co-pending application GB 0526331.4 having the same priority date as the present application. The present invention is equally applicable to single-control devices. In these and other respects the invention is not to be taken as limited to the embodiments shown or described, and is rather defined by the appended claims.

## Claims

1. A lever action tap comprising a body (1) on which is mounted at least one rotary control (2) for manually regulating the flow of water through the tap to a spout, the control (2) having open and closed states separated by rotation less than 180° about a rotation axis, **characterised by** the control (2) comprising a long lever arm (3) and at least one short lever arm (4) having a fixed angular separation, either lever arm (3, 4) being operable to operate the same rotary control (2).

2. A tap as claimed in claim 1 wherein the angle of rotation between the open and closed states is in the range 50-100°.

3. A tap as claimed in claim 2 wherein the angle of rotation between the open and closed states is substantially equal to 90°.

4. A tap as claimed in any preceding claim wherein the arrangement of the lever arms and orientation of the rotation axis in relation to the intended mounting orientation of the tap is such that, when the tap is mounted for use, the long lever arm (3) will be approximately vertical in the closed state of the control, and projecting generally towards the user in the open state.

5. A tap as claimed in any preceding claim wherein the rotation axis of the control (2) is substantially horizontal, and transverse to the typical stance of the user.

6. A tap as claimed in any preceding claim wherein the long lever arm (3) is arranged to rotate upwards and away from the user in moving from the open state to the closed state.

7. A tap as claimed in claim 6 wherein the long lever arm (3) is arranged to rotate slightly beyond vertical and away from the user, before completing said rotation to the closed state.

8. A tap as claimed in any preceding claim wherein the arrangement of the lever arms (3, 4) and mounting means of the tap is such that the short lever arm (4) projects generally toward the user in the closed state, moving to a more vertical orientation in the open state.

9. A tap as claimed in claim 8 wherein the short lever arm (4) is arranged to rotate downwards and away from the user, in moving from the closed state to the open state.

10. A tap as claimed in claim 8 or 9 wherein the short level arm (4) is arranged to lie at an angle slightly below horizontal in the closed state.

11. A tap as claimed in any preceding claim wherein the angular separation between the lever arms (3, 4) is in the range 80° and 160°.

12. A tap as claimed in claim 11 wherein the angular separation between the lever arms (3, 4) is in the range 100° and 140°.

13. A tap as claimed in any preceding claim wherein the long lever arm (3) extends 12cm or more from the rotation axis.

14. A tap as claimed in any preceding claim wherein the short lever arm (4) extends less than 16cm from the rotation axis of the control (2).

15. A tap as claimed in any preceding claim wherein the short lever arm (4) extends less than 10cm from the rotation axis of the control (2).

16. A tap as claimed in any preceding claim wherein the long lever arm (3) extends to more than twice the length of the short lever arm (4), measured from their common rotation axis.

17. A lever action tap comprising a body (1) on which is mounted at least one rotary control (2) for manually regulating the flow of water through the tap to a spout, the control (2) having open and closed states separated by rotation less than 180° about a rotation axis, **characterised in that** the control (2) comprises first and second lever arms (3, 4) having a fixed angular separation, either lever arm (3, 4) being operable to operate the same rotary control (2), and **in that** the rotation axis is oriented substantially horizontal and transversely with respect to the typical stance of a user so that said lever arms (3, 4) rotate towards and away from the user in moving the control (2) between said open and closed states.

18. A tap as claimed in claim 17 wherein the first lever arm (3) is arranged to rotate upwards and away from the user in moving from the open state to the closed state.

19. A tap as claimed in claim 17 or 18 wherein the second lever arm (4) is arranged to rotate downwards and away from the user, in moving from the closed state to the open state.

20. A tap as claimed in any preceding claim wherein the tap is a mixer tap having inlets for cold and hot water supplies and having a second control of the same form as the first-mentioned control.

21. A tap as claimed in claim 20 wherein said first and second controls are arranged at opposite sides of the tap body (1), either side of the spout portion.

22. A tap as claimed in claim 20 or 21 wherein the rotation axes of the two controls are aligned with one another.

23. A tap as claimed in claim 20, 21 or 22 wherein the mixer tap body incorporates a thermostatic element for controlling mixing of water from hot and cold water supplies, to provide a safe hot output temperature, the first control (2) regulating flow of the safe temperature hot water and the second control regulating flow of unmixed cold water to the spout portion.

## Patentansprüche

1. Ein Wasserhahn mit Hebelbetätigung, der einen Körper (1), auf dem mindestens ein Drehregler (2) zum manuellen Regulieren des Durchflusses von Wasser durch den Wasserhahn zu einem Auslauf montiert ist, beinhaltet, wobei der Regler (2) einen geöffneten und einen geschlossenen Zustand aufweist, die durch eine Drehung von weniger als 180° um eine Drehachse getrennt sind, **dadurch gekennzeichnet, dass** der Regler (2) einen langen Hebelarm (3) und mindestens einen kurzen Hebelarm (4), die einen festgesetzten Winkelabstand aufweisen, beinhaltet, wobei jeder Hebelarm (3, 4) bedienbar ist, um denselben Drehregler (2) zu bedienen.

2. Wasserhahn gemäß Anspruch 1, wobei der Drehwinkel zwischen dem offenen und dem geschlossenen Zustand in dem Bereich von 50-100° liegt.

3. Wasserhahn gemäß Anspruch 2, wobei der Drehwinkel zwischen dem offenen und dem geschlossenen Zustand im Wesentlichen gleich 90° ist.

4. Wasserhahn gemäß einem der vorhergehenden Ansprüche, wobei die Anordnung der Hebelarme und die Ausrichtung der Drehachse in Bezug auf die beabsichtigte Montageausrichtung des Wasserhahns derart sind, dass, wenn der Wasserhahn für den Gebrauch montiert ist, der lange Hebelarm (3) im geschlossenen Zustand des Reglers ungefähr senkrecht steht und im offenen Zustand im Allgemeinen zu dem Benutzer hin vorsteht.

5. Wasserhahn gemäß einem der vorhergehenden Ansprüche, wobei die Drehachse des Reglers (2) im Wesentlichen horizontal ist und quer zu der typischen Stellung des Benutzers steht.

6. Wasserhahn gemäß einem der vorhergehenden Ansprüche, wobei der lange Hebelarm (3) angeordnet ist, um sich bei der Bewegung von dem offenen Zustand in den geschlossenen Zustand nach oben und von dem Benutzer weg zu drehen.

7. Wasserhahn gemäß Anspruch 6, wobei der lange Hebelarm (3) angeordnet ist, um sich vor dem Abschließen der Drehung in den geschlossenen Zustand geringfügig über die Vertikale hinaus und von dem Benutzer weg zu drehen.

8. Wasserhahn gemäß einem der vorhergehenden Ansprüche, wobei die Anordnung der Hebelarme (3, 4) und des Montagemittels des Wasserhahns derart ist, dass der kurze Hebelarm (4) in dem geschlossenen Zustand im Allgemeinen zu dem Benutzer hin vorsteht und sich in dem offenen Zustand zu einer vertikaleren Ausrichtung bewegt.

9. Wasserhahn gemäß Anspruch 8, wobei der kurze Hebelarm (4) angeordnet ist, um sich bei der Bewegung von dem geschlossenen Zustand in den offenen Zustand nach unten und von dem Benutzer weg zu drehen.

10. Wasserhahn gemäß Anspruch 8 oder 9, wobei der kurze Hebelarm (4) angeordnet ist, um in dem geschlossenen Zustand in einem Winkel geringfügig unterhalb der Horizontalen zu liegen.

11. Wasserhahn gemäß einem der vorhergehenden Ansprüche, wobei der Winkelabstand zwischen den Hebelarmen (3, 4) in dem Bereich von 80° bis 160° liegt.

12. Wasserhahn gemäß Anspruch 11, wobei der Winkelabstand zwischen den Hebelarmen (3, 4) in dem Bereich von 100° bis 140 ° liegt.

13. Wasserhahn gemäß einem der vorhergehenden Ansprüche, wobei sich der lange Hebelarm (3) 12 cm oder weiter von der Drehachse erstreckt.

14. Wasserhahn gemäß einem der vorhergehenden Ansprüche, wobei sich der kurze Hebelarm (4) weniger als 16 cm von der Drehachse des Reglers (2) erstreckt.

15. Wasserhahn gemäß einem der vorhergehenden Ansprüche, wobei sich der kurze Hebelarm (4) weniger als 10 cm von der Drehachse des Reglers (2) erstreckt.

16. Wasserhahn gemäß einem der vorhergehenden Ansprüche, wobei sich der lange Hebelarm (3) gemessen von ihrer gemeinsamen Drehachse über mehr als die doppelte Länge des kurzen Hebelarms (4) erstreckt.

17. Ein Wasserhahn mit Hebelbetätigung, der einen Körper (1) beinhaltet, auf dem mindestens ein Drehregler (2) montiert ist, um den Durchfluss von Wasser durch den Wasserhahn zu einem Auslauf manuell zu regulieren, wobei der Regler (2) einen offenen und einen geschlossenen Zustand aufweist, die durch eine Drehung um weniger als 180° um eine Drehachse getrennt sind, **dadurch gekennzeichnet, dass** der Regler (2) einen ersten und einen zweiten Hebelarm (3, 4) beinhaltet, die einen festgesetzten Winkelabstand aufweisen, wobei jeder Hebelarm (3, 4) bedienbar ist, um denselben Drehregler (2) zu bedienen, und **dadurch**, dass die Drehachse im Wesentlichen horizontal und quer in Bezug auf die typische Stellung eines Benutzers ausgerichtet ist, so dass sich die Hebelarme (3, 4) beim Bewegen des Reglers (2) zwischen dem offenen und dem geschlossenen Zustand zu dem Benutzer hin und von ihm weg drehen.

18. Wasserhahn gemäß Anspruch 17, wobei der erste Hebelarm (3) angeordnet ist, um sich bei der Bewegung von dem offenen Zustand in den geschlossene Zustand nach oben und von dem Benutzer weg zu drehen.

19. Wasserhahn gemäß Anspruch 17 oder 18, wobei der zweite Hebelarm (4) angeordnet ist, um sich bei der Bewegung von dem geschlossenen Zustand in den offenen Zustand nach unten und von dem Benutzer weg zu drehen.

20. Wasserhahn gemäß einem der vorhergehenden Ansprüche, wobei der Wasserhahn eine Mischbatterie ist, die Einlässe für die Anschlüsse von kaltem und warmem Wasser aufweist und die einen zweiten Regler mit der gleichen Form wie der zuerst erwähnte Regler aufweist.

21. Wasserhahn gemäß Anspruch 20, wobei der erste und der zweite Regler an entgegengesetzten Seiten des Wasserhahnkörpers (1) zu jeder Seite des Auslaufabschnitts angeordnet sind.

22. Wasserhahn gemäß Anspruch 20 oder 21, wobei die Drehachsen der zwei Regler aufeinander abgestimmt sind.

23. Wasserhahn gemäß Anspruch 20, 21 oder 22, wobei der Körper der Mischbatterie ein thermostatisches Element zum Regeln des Mischens von Wasser aus den Anschlüssen von warmem und kaltem Wasser inkorporiert, um eine sichere warme Auslasstemperatur bereitzustellen, wobei der ersten Regler (2) den Durchfluss des warmen Wassers sicherer Temperatur reguliert und der zweite Regler den Durchfluss von ungemischtem kaltem Wasser zu dem Auslaufabschnitt reguliert.

## Revendications

1. Un robinet à levier comprenant un corps (1) sur lequel est montée au moins une commande rotative (2) destinée à réguler manuellement le flux d'eau traversant le robinet jusqu'à un bec, la commande (2) ayant un état ouvert et un état fermé séparés par une rotation de moins de 180°autour d'un axe de rotation, **caractérisé par le fait que** la commande (2) comprend un bras formant levier long (3) et au moins un bras formant levier court (4) présentant une séparation angulaire fixe, l'un ou l'autre bras formant levier (3, 4) pouvant être actionné pour actionner la même commande rotative (2).

2. Un robinet tel que revendiqué dans la revendication 1 dans lequel l'angle de rotation entre l'état ouvert et l'état fermé est compris dans la gamme allant de 50 à 100°.

3. Un robinet tel que revendiqué dans la revendication 2 dans lequel l'angle de rotation entre l'état ouvert et l'état fermé est substantiellement égal à 90°.

4. Un robinet tel que revendiqué dans n'importe quelle revendication précédente dans lequel l'agencement des bras formant leviers et l'orientation de l'axe de rotation par rapport à l'orientation de montage voulue du robinet est tel que, lorsque le robinet est monté pour être utilisé, le bras formant levier long (3) sera approximativement vertical dans l'état fermé de la commande, et se projettera généralement en direction de l'utilisateur dans l'état ouvert.

5. Un robinet tel que revendiqué dans n'importe quelle revendication précédente dans lequel l'axe de rotation de la commande (2) est substantiellement horizontal, et transversal par rapport à la position typique de l'utilisateur.

6. Un robinet tel que revendiqué dans n'importe quelle revendication précédente dans lequel le bras formant levier long (3) est agencé de manière à tourner vers le haut et en s'écartant de l'utilisateur lorsqu'il passe de l'état ouvert à l'état fermé.

7. Un robinet tel que revendiqué dans la revendication 6 dans lequel le bras formant levier long (3) est agencé de manière à tourner légèrement au-delà de la verticale et en s'écartant de l'utilisateur, avant d'achever ladite rotation jusqu'à l'état fermé.

8. Un robinet tel que revendiqué dans n'importe quelle revendication précédente dans lequel l'agencement des bras formant leviers (3, 4) et du moyen de montage du robinet est tel que le bras formant levier court (4) se projette généralement en direction de l'utilisateur dans l'état fermé, passant à une orientation plus verticale dans l'état ouvert.

9. Un robinet tel que revendiqué dans la revendication 8 dans lequel le bras formant levier court (4) est agencé pour tourner vers le bas et en s'écartant de l'utilisateur, lorsqu'il passe de l'état fermé à l'état ouvert.

10. Un robinet tel que revendiqué dans la revendication 8 ou la revendication 9 dans lequel le bras formant levier court (4) est agencé pour s'étendre à un angle légèrement en dessous de l'horizontale dans l'état fermé.

11. Un robinet tel que revendiqué dans n'importe quelle revendication précédente dans lequel la séparation angulaire entre les bras formant leviers (3, 4) se situe dans la gamme comprise entre 80°et 160°.

12. Un robinet tel que revendiqué dans la revendication 11 dans lequel la séparation angulaire entre les bras formant leviers (3, 4) se situe dans la gamme comprise entre 100°et 140°.

13. Un robinet tel que revendiqué dans n'importe quelle revendication précédente dans lequel le bras formant levier long (3) se prolonge sur 12 cm ou plus depuis l'axe de rotation.

14. Un robinet tel que revendiqué dans n'importe quelle revendication précédente dans lequel le bras formant levier court (4) se prolonge sur moins de 16 cm depuis l'axe de rotation de la commande (2).

15. Un robinet tel que revendiqué dans n'importe quelle revendication précédente dans lequel le bras formant levier court (4) se prolonge sur moins de 10 cm depuis l'axe de rotation de la commande (2).

16. Un robinet tel que revendiqué dans n'importe quelle revendication précédente dans lequel le bras formant levier long (3) se prolonge sur plus de deux fois la longueur du bras formant levier court (4), mesuré à partir de leur axe de rotation commun.

17. Un robinet à levier comprenant un corps (1) sur lequel est montée au moins une commande rotative (2) destinée à réguler manuellement le flux d'eau traversant le robinet jusqu'à un bec, la commande (2) ayant un état ouvert et un état fermé séparés par une rotation de moins de 180° autour d'un axe de rotation, **caractérisé en ce que** la commande (2) comprend des premier et deuxième bras formant leviers (3, 4) présentant une séparation angulaire fixe, l'un ou l'autre bras formant levier (3, 4) pouvant être actionné pour actionner la même commande rotative (2), et **en ce que** l'axe de rotation est orienté de façon substantiellement horizontale et transversale par rapport à la position typique d'un utilisateur si bien que lesdits bras formant leviers (3, 4) tournent en direction de et en s'écartant de l'utilisateur lorsqu'ils font passer la commande (2) entre lesdits états ouvert et fermé.

18. Un robinet tel que revendiqué dans la revendication 17 dans lequel le premier bras formant levier (3) est agencé pour tourner vers le haut et en s'écartant de l'utilisateur lorsqu'il passe de l'état ouvert à l'état fermé.

19. Un robinet tel que revendiqué dans la revendication 17 ou la revendication 18 dans lequel le deuxième bras formant levier (4) est agencé pour tourner vers le bas et en s'écartant de l'utilisateur, lorsqu'il passe de l'état fermé à l'état ouvert.

20. Un robinet tel que revendiqué dans n'importe quelle revendication précédente dans lequel le robinet est un robinet mitigeur disposant d'entrées pour l'arrivée d'eau froide et l'arrivée d'eau chaude et présentant une deuxième commande de la même forme que la commande mentionnée en premier.

21. Un robinet tel que revendiqué dans la revendication 20 dans lequel lesdites première et deuxième commandes sont agencées au niveau de côtés opposés du corps de robinet (1), de chaque côté de la portion de bec.

22. Un robinet tel que revendiqué dans la revendication 20 ou la revendication 21, dans lequel les axes de rotation des deux commandes sont alignés l'un avec l'autre.

23. Un robinet tel que revendiqué dans la revendication 20, la revendication 21 ou la revendication 22 dans lequel le corps de robinet mitigeur incorpore un élément thermostatique destiné à contrôler le mélange d'eau provenant de l'arrivée d'eau chaude et de l'arrivée d'eau froide, afin de fournir une température de sortie chaude sans danger, la première commande (2) régulant le flux d'eau chaude à température sans danger et la deuxième commande régulant le flux d'eau froide non mélangée jusqu'à la portion de bec.
